# EUROPEAN PATENT APPLICATION

(11) **EP 1 942 356 A1**
(43) Date of publication of application: **09.07.2008**
(21) Application number: 06821880.9
(22) Date of filing: 16.10.2006
(51) Int. Cl.: G02B 5/28, B32B 17/10, B60J 1/00, C03C 27/12

(54) **NEAR INFRARED RAY REFLECTIVE SUBSTRATE AND NEAR INFRARED RAY REFLECTIVE LAMINATED GLASS EMPLOYING THAT SUBSTRATE, NEAR INFRARED RAY REFLECTIVE DOUBLE LAYER GLASS**

(30) Priority: 26.10.2005 JP 2005310834; 04.11.2005 JP 2005320726; 14.04.2006 JP 2006112250; 14.04.2006 JP 2006112251
(71) Applicant: Central Glass Co., Ltd., Ube-shi 755-0001 Yamaguchi-ken (JP)
(72) Inventor: TAKAMATSU, Atsushi Glass Research Center of Central Company Ltd, Mie 515-0001 (JP); YONEKURA, Masaaki Nasu R&D Center of Central Glass Company Ltd, Tochigi 329-2811 (JP); OMOTO, Hideo Glass Research Center of Central Glass Company Ltd, Mie 515-0001 (JP); NAKAMURA, Isao Matsuzaka Plant of Central Glass Company Ltd, Mie 515-0001 (JP)
(74) Representative: Finsterwald, Martin
(86) International application number: PCT/JP2006/320575
(87) International publication number: WO 2007/049478

(57) **Abstract**

In a near-infrared reflective substrate prepared by forming on a transparent substrate a near-infrared reflective film prepared by alternate deposition of low-refractive-index dielectric films and high-refractive-index dielectric films, there is provided a near-infrared reflective substrate **characterized in that** the transparent substrate is a plate glass or polymer resin sheet, that it is 70% or greater in visible light transmittance defined in JIS R3106-1998, and that it has a maximum value of reflection that exceeds 50% in a wavelength region of 900nm to 1400nm.

## Description

### TECHNICAL FIELD

The present invention relates to a heat-ray reflective substrate, which is used for lowering the temperature increase of the transmission side of a vehicular or architectural window, which is caused by thermal radiation of the sunshine, and for lowering the temperature increase caused by thermal radiation of the sunshine falling directly on a display, and a laminated glass and a double glazing using such heat-ray reflective substrate.

### BACKGROUND OF THE INVENTION

There are many proposals of making a comfortable interior space by restricting the temperature increase of an interior through lowering the thermal radiation energy of the sunshine flowing into the interior through the window glass, by restricting the electric energy consumption consumed by driving an air-cooling apparatus, and by maintaining a high visible light transmittance of the window glass.

It is proposed by Patent Publication 1 that, in a laminated glass having an interlayer film between at least two transparent glass plate-like bodies, the solar transmittance is lowered to around 50%, while maintaining the transmittance of the visible light region high, by dispersing conductive ultra-fine particles (particle diameter: 0.2µm or less) in the interlayer.

The laminated glass disclosed in Patent Publication 1, however, absorbs the near-infrared light. Therefore, the laminated glass itself becomes warm, and the temperature increases. The radiant heat is radiated from the laminated glass toward the interior, which is called reradiation, in contrast to the radiation of solar rays. Therefore, the room temperature increases after the lapse of a long time.

There is disclosed in Patent Publication 2 a laminated glass produced by forming on a polyester film a metal film having a solar reflectance of 10% or greater or an interference film and a reflective film with a resin lamination and by interposing this between polyvinyl butyral films. This laminated glass has a weakness that the thickness and the weight increase, as compared with current laminated glasses.

Furthermore, Patent Publication 3 discloses a heat-ray reflective laminated windshield prepared by five layers in total of Ag films and metal oxide films. Patent Publication 4 discloses a heat-ray reflective glass prepared by laminating four layers of ITO films, AlN films and metal films.

It is, however, not possible to obtain a sufficient heat insulation, since the reflectance of near-infrared region is small in the reflection by the interference film of Patent Publication 2.

Furthermore, there are used conductive films, such as conductive metal films and conductive oxide films, in the reflective film formed of the metal films of Patent Publication 2 and in the heat-ray reflective laminated glasses disclosed in Patent Publication 3 and Patent Publication 4. If conductive films are used, radio waves in a wide-range frequency band, such as television, radio, ETC, wireless LAN and cellular phone, are not transmitted, and at the present time, at which communication systems by various radio waves are constructed, communication systems by radio waves are not utilized, thereby making it difficult to use them for architectural and vehicular windows.
Patent Publication 1: Japanese Patent Laid-open Publication 8-259279
Patent Publication 2: Japanese Patent Laid-open Publication 2003-342046
Patent Publication 3: Japanese Patent Laid-open Publication 2002-348151
Patent Publication 4: Japanese Patent Laid-open Publication 2-160641

### SUMMARY OF THE INVENTION

The present invention was made for solving problems of near-infrared reflective laminated glasses according to such prior art techniques, and provides a near-infrared reflective substrate, a near-infrared reflective laminated glass and a near-infrared reflective double glazing, which are high in visible light transmittance defined in JIS R3106-1998, have a good heat insulation effect due to high reflectance of near-infrared region, and transmit various radio waves.

According to the present invention, in a near-infrared reflective substrate prepared by forming on a transparent substrate a near-infrared reflective film prepared by alternate deposition of low-refractive-index dielectric films and high-refractive-index dielectric films, there is provided the near-infrared reflective substrate characterized in that the near-infrared reflective film is prepared by deposition of the dielectric films that are 4 layers or greater and 11 layers or less to satisfy conditions of the following (1) and (2), is 70% or greater in visible light transmittance defined in JIS R3106-1998, and has a maximum value of reflection that exceeds 50% in a wavelength region of 900nm to 1400nm,
(1) when the dielectric films are numbered in order from a side of the transparent substrate, when maximum and minimum values of refractive index of an even-numbered layer are respectively referred to as nₑₘₐₓ and nₑₘᵢₙ, and when maximum and minimum values of refractive index of an odd-numbered layer are respectively referred to as nₒₘₐₓ and nₒₘᵢₙ, nₑₘₐₓ<nₒₘᵢₙ Or nₒₘₐₓ<nₑₘᵢₙ,
(2) when the layer numbered "i" has a refractive index of nᵢ and a thickness of dᵢ, 225nm≤ nᵢ · dᵢ ≤350nm relative to an infrared rays having a wavelength λ in a range of 900 to 1,400nm.

In case that the transparent substrate is a plate glass, the near-infrared reflective substrate may be referred to as a first substrate. According to the present invention, there is provided a near-infrared reflective laminated glass (a first laminated glass) characterized in that the first substrate is laminated on one plate glass or plate-like resin using an interlayer film.

Furthermore, according to the present invention, there is provided a double glazing in which two plate glasses are opposingly disposed and in which there is formed an air layer sealed between the two plate glasses using a sealing member at a periphery of the two plate glasses, the double glazing being a near-infrared reflective double glazing characterized in that the first substrate is used as at least one plate glass of the double glazing and that the near-infrared reflective film is positioned on a side of the air layer.

In case that the transparent substrate is a polymer resin sheet, the near-infrared reflective substrate may be referred to as a second substrate. According to the present invention, there is provided a near-infrared reflective laminated glass (a second laminated glass) characterized in that the second substrate, in which the transparent substrate is a polymer resin sheet, is laminated between the two plate glasses using an interlayer film.

### BRIEF DESCRIPTION OF THE DRAWINGS

Fig. 1 is a sectional view showing a structure of a near-infrared reflective substrate of the present invention;
Fig. 2 is a sectional view showing a structure of a near-infrared reflective laminated glass prepared by using a plate glass as the transparent substrate;
Fig. 3 is a sectional view showing a structure of a near-infrared reflective double glazing prepared by using a plate glass as the transparent substrate;
Fig. 4 is a sectional view showing a structure of a near-infrared reflective laminated glass using a polymer resin sheet as the transparent substrate; and
Fig. 5 is a sectional view of another structure of a near-infrared reflective laminated glass using a polymer resin sheet as the transparent substrate.

### DETAILED DESCRIPTION

The present invention provides a near-infrared reflective substrate, a laminated glass and a near-infrared reflective double glazing, which are high in transmittance in visible light region, have a good heat insulation effect, and transmit various radio waves.

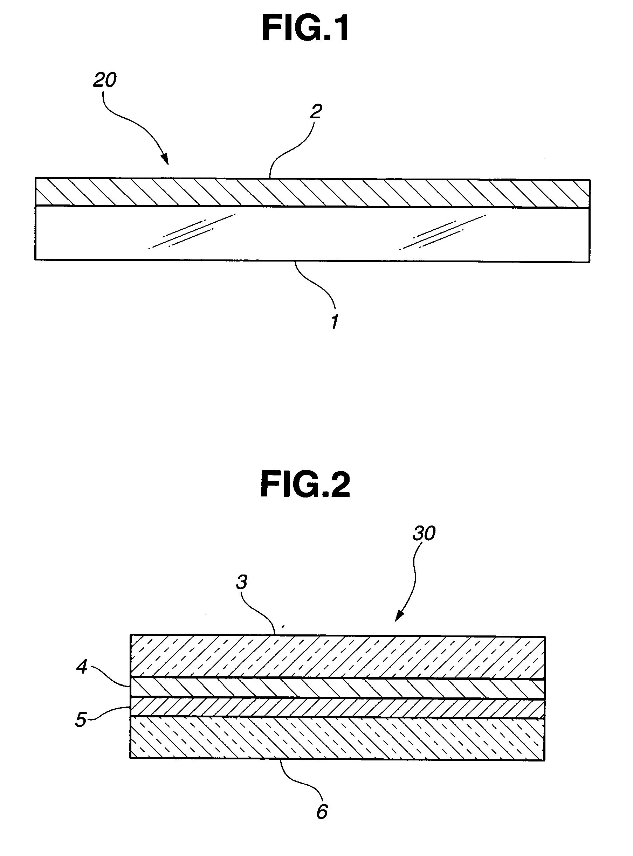

As shown in Fig. 1, a near-infrared reflective substrate of the present invention is one in which, on a transparent substrate 1, there has been formed a near-infrared reflective film 2 comprising a multi-layered film prepared by deposition of transparent dielectric substances. It is 70% or greater in visible light transmittance defined in JIS R3106-1998, and has a maximum value of reflection that exceeds 50% in a wavelength region of 900nm to 1400nm.

It is possible to use a plate glass or transparent polymer resin sheet as the transparent substrate 1.

As the plate glass, it is simple to use a soda-lime glass that is good in flatness, is less in distortion of the transmission image, has stiffness of a certain degree thereby being less in distortion by wind or external force, is superior in transmission of visible light region, is by float process by which it can be obtained at a relatively low cost, is less in coloring component such as metal oxide, and is called a transparent type or clear type.

It is optional to improve heat insulation performance by using an infrared absorptive glass as the plate glass 1. In case that an infrared absorptive glass is used as the plate glass 1, it is preferable to position the near-infrared reflective film 2 on a side, on which infrared rays such as sunlight are incident, and to position the plate glass 1 on the transmission side.

It is preferable that the thickness of the plate glass used for the near-infrared reflective substrate of the present invention is in a range of 1-6mm, in view of strength and light transmission of visible light region. It does not, however, limit the thickness of the glass used in the present invention.

When a polymer resin sheet is used as the transparent substrate, there is used a polymer sheet, such as polyethylene terephthalate, polyethylene naphthalate, polycarbonate, polymethyl methacrylate, polyether sulfone, nylon, polyarylate, and cycloolefin polymer.

It is preferable that the thickness of the polymer resin sheet is in a range of 10µm to 2mm, in view of strength and light transmission of visible light region. In particular, it is desirably in a range of 10µm to 200µm in case that it is laminated between two plate glasses to be used as a laminated glass.

The surface of the polymer resin sheet may be coated with a surface reforming member, such as silane compound, water-dispersive polyester substance and imine substance, for the purpose of improving adhesion to the dielectric film constituting the near-infrared reflective film and flatness of the surface.

It is optional to mix fine particles of an inorganic oxide or inorganic oxynitride, such as SiO₂, SiON and Al₂O₃, with the surface reforming member to the extent that the transmission characteristics are not impaired and that refractive index is not largely changed.

Furthermore, the heat insulation performance improves by using an infrared absorbing film, such as a polyethylene terephthalate or polycarbonate containing an infrared absorbing pigment or a polyethylene terephthalate or polycarbonate coated with an infrared absorbing paint, as the polymer resin sheet. Therefore, it is preferable.

It is possible to preferably use a transparent dielectric, such as TiO₂, Nb₂O₅, Ta₂O₅, SiO₂, Al₂O₃, ZrO₂ and MgF₂, for the dielectric film.

The reason for using a multi-layer film formed of transparent dielectrics as the near-infrared reflective film 2 is that the use of a dielectric having a strong absorption in visible region lowers the transmission of visible region of the near-infrared reflective film 2, does not make it possible to secure visibility, and makes it difficult to use that as a window opening.

If conductive films, such as various thin metal films and conductive oxide films, are used for the infrared reflective film, lights and radio waves having wavelengths longer than near-infrared rays are reflected.
Therefore, radio waves used for various communications, such as cellular phone, wireless LAN, television and radio, are also reflected, thereby exerting adverse effects to paralyze these communication functions. In the case of using it as an automotive window, it becomes impossible to use communication functions using radio waves. Besides, it becomes difficult to give and receive various radio waves related to safe operations, such as ETC, GPC and ORBIS. Therefore, it is desirable to use a deposition film by dielectrics, not by conductive films, as the near-infrared reflective film.

It is desirable to use a sputtering method, which can form a film with uniform thickness to have a large area, for deposition of dielectric films.

The film forming method is, however, not limited to sputtering method. It is possible to use vapor deposition, ion plating method, CVD method, sol-gel process and the like, depending on the size of the substrate.

The near-infrared reflective film reflects near-infrared rays by interference of the dielectric films. When the dielectric films constituting the near-infrared reflective films are numbered in order from a side of the transparent substrate, when maximum and minimum values of refractive index of an even-numbered layer are respectively referred to as nₑₘₐₓ and nₑₘᵢₙ, and when maximum and minimum values of refractive index of an odd-numbered layer are respectively referred to as nₒₘₐₓ and nₒₘᵢₙ, nₑₘₐₓ<nₒₘᵢₙ or nₒₘₐₓ<nₑₘᵢₙ is desirable.

Furthermore, when the layer numbered "i" has a refractive index of nᵢ and a thickness of dᵢ, it is important that the optical path difference nᵢ · dᵢ is 1/4 of the wavelength relative to an infrared ray having a wavelength in a range of 900nm to 1400nm. Therefore, it is desirable that the optical path difference nᵢ · dᵢ is 900nm/4 = 225nm or greater and 1400nm/4 = 350nm or less relative to a range of 900nm to 1400nm in wavelength.

The near-infrared reflective film formed of the dielectric multilayer film can effectively reflect a light of a wavelength region of 900nm to 1400nm by forming the refractive index n and the thickness d of the dielectric films in a manner to satisfy the above-mentioned condition.

It is desirable that the number of the dielectric films deposited to constitute the near-infrared reflective film is four or greater, since the reflection of the near-infrared region is insufficient with three layers or less.

As the number of the layers increases, the maximum value of the reflection in the near-infrared region becomes greater, and the color of the visible light region becomes closer to colorlessness. With this, it becomes a better near-infrared reflective substrate. If the number of the layers exceeds 12, the production cost becomes high. Furthermore, there occurs a problem in durability by the increase of the film stress due to the increase of the number of the films. Therefore, being 11 layers or less is preferable.

The near-infrared reflective substrate of the present invention can reduce the temperature increase due to thermal radiation of various display devices used in a place receiving the direct sunshine. Therefore, it can preferably be used for the front surface of a display device for the purpose of improving the lifetime of the device.

Furthermore, as shown in Fig. 2, it becomes possible to use in a wide use the near-infrared reflective substrate using glass as the transparent substrate, irrespective of durability of the near-infrared reflective film, by using it as a near-infrared reflective laminated glass in a manner that the near-infrared reflective film 4 laminated on the plate glass 3 is in contact with the interlayer film 5.

Ethylenevinyl acetate (EVA) or polyvinyl butyral (PVB) is preferably used for the interlayer film 3.

In the near-infrared reflective laminated glass shown in Fig. 2, it is desirable to dispose the plate glass 3 on the incidence side of infrared rays such as sunshine and to use a glass having absorption as less as possible relative to infrared rays of a wavelength range of 900nm to 1400nm. Its reason is as follows. If the plate glass 3 absorbs near-infrared rays that are reflected by the near-infrared reflective film 4, it absorbs heat rays that are radiated from the sun, prior to the reflection by the near-infrared reflective film 4, and the temperature of the near-infrared reflective laminated glass increases, and heat is reradiated from the near-infrared laminated glass to the transmission side, and the heat insulation effect of the near-infrared reflective film 4 becomes low.

It is preferable to form the near-infrared reflective film 4 on the surface (lamination surface) on which the plate glass 3 or plate glass 6 is in contact with the interlayer film 5. Furthermore, it may be formed on both lamination surfaces of the plate glass 3 and the plate glass 6, but it is the most effective to form the same on the lamination surface of the plate glass 3. The reason of this is that many of the interlayer film 5 have absorption in the near-infrared region, thereby absorbing it prior to the reflection by the near-infrared reflective film. Furthermore, it is for preventing lowering of the heat insulation effect.

The interlayer film 5 may be used by forming different kinds of interlayer films into a multilayer, as well as using it in a single layer.

Furthermore, heat insulation is improved by containing various infrared-absorbing fine particles in the interlayer film 5 to the extent of not disturbing the visible light transmittance. Therefore, it is preferable. As the infrared-absorbing fine particles, there are, for example, metal fine particles such as Ag, Al and Ti, fine particles of metal nitrides and metal oxides, and conductive transparent oxide fine particles such as ITO, ATO, AZO, GZO, and IZO. Selecting at least one from these and containing it in the interlayer film 5 can improve heat insulation performance. In particular, conductive transparent oxide fine particles, such as ITO, ATO, AZO, GZO and IZO, are desirable.

As the plate glass 6, similar to the incidence side glass 3, it is simple to use a soda-lime glass, prepared by float process, that is superior in flatness and is less in distortion of the transmission image, and is obtained with low cost.

The use of an infrared absorbing glass as the plate glass 6 improves heat insulation performance. Therefore, it is preferable. As the infrared-absorbing glass, it is possible to use a glass that absorbs near-infrared rays by fusing metal ions such as Fe in the glass. It is also possible to use an infrared-absorbing plate glass defined in JIS R3208-1998.

It is preferable that the thickness of the plate glass 6 used for the near-infrared reflective laminated glass of Fig. 2 is in a range of 1-6mm in view of intensity and transmission of near-infrared light of the visible light region, but it does not limit the thickness of the glass used in the present invention. Furthermore, the thickness of the plate glass 3 and the thickness of the plate glass 6 may be the same or different.

The thickness of the interlayer film 5 is preferably about 0.3-2mm, but it is not particularly limited to this thickness.

It is not preferable to use conductive glass and interlayer, since they damage radio transmission of the near-infrared reflective laminated glass of the present invention. It is, however, possible to preferably use a composite film, such as the above-mentioned one in which fine particles of conductive metal and conductive oxide are dispersed in an interlayer, as long as it does not have a conductivity to reflect radio waves.

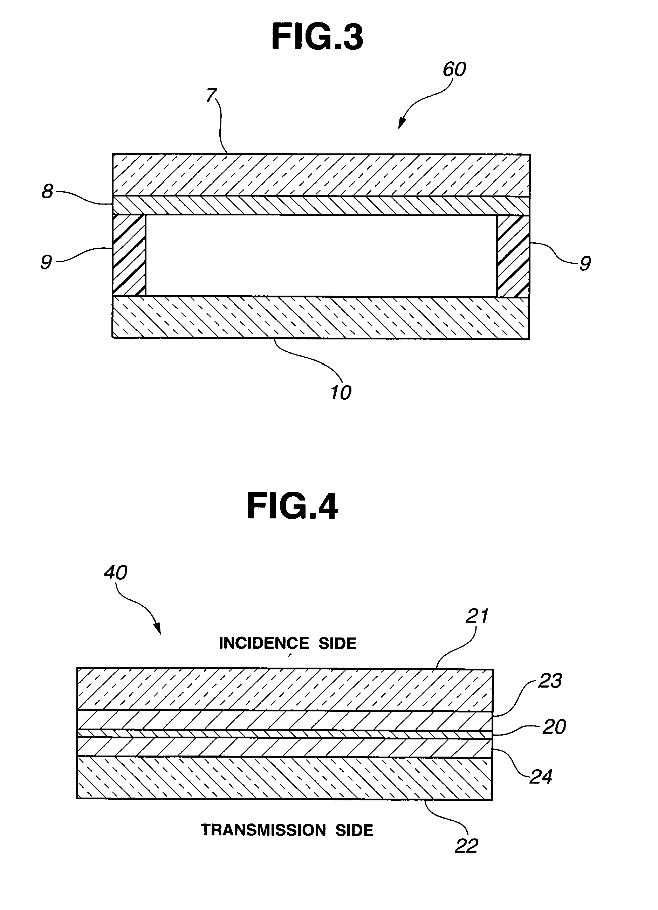

A near-infrared reflective substrate 20 prepared by using a plate glass as the transparent substrate 1 and by forming an infrared reflective film 2 is used as a laminated glass. Besides, in a double glazing in which a sealed space, which is called air layer, is formed by sealing a periphery portion of two plate glasses with a sealing member, a double glazing that is superior in heat insulation performance and is radio transmissive can be formed by making a near-infrared reflective double glazing 60 shown in Fig. 3 by using the near-infrared reflective substrate 20 as at least one of the two plate glasses. This double glazing 60 has two plate glasses 7, 10 and a sealing member 9.

By positioning the near-infrared reflective film 8 on the side of the air layer in this double glazing, it is almost not affected by durability of the near-infrared reflective film 8. Thus, it can be used at an opening portion of a building.

In case that the near-infrared reflective double glazing of the present invention is used as a window, it is desirable to use a glass having an absorption as little as possible relative to near infrared rays in a wavelength range of 900nm to 1400nm as the exterior plate glass (plate glass 7). Furthermore, the use of an infrared absorptive glass as the interior plate glass (plate glass 10) further improves heat insulation performance. Therefore, it is preferable.

When a polymer resin sheet is used as the transparent substrate 1 of Fig. 1, as shown in Fig. 4, if the near-infrared reflective substrate 20 (a laminate of the polymer resin sheet 1 and the near-infrared reflective film 2) is laminated with the plate glasses 21, 22 in a manner to be in contact with the interlayer film 23 and/or interlayer film 24 to use it as a near-infrared reflective laminated glass, the use in a wide use becomes possible irrespective of durability of the near-infrared reflective film 2.

When the near-infrared reflective substrate 20 is formed into a near-infrared reflective laminated glass by using interlayer films 23, 24, the polymer resin sheet is exposed to a temperature exceeding 100°C.
Therefore, depending on the temperature upon conducting the lamination, there is more preferably used a polymer resin sheet that is less in contraction and elongation.

There is preferably used ethylenevinyl acetate (EVA) or polyvinyl butyral (PVB) for the interlayer films 23, 24.

In the near-infrared reflective laminated glass shown in Fig. 4, in case that the plate glass 21 is arranged on the incidence side of infrared rays such as sunshine, it is desirable to use a glass having an absorption as little as possible relative to near infrared rays in a wavelength range of 900nm to 1400nm. The reason is as follows. If the plate glass 21 absorbs near-infrared rays that should be reflected from the near-infrared reflective substrate 20, it absorbs heat rays that are radiated from the sun, prior to the reflection from the near-infrared reflective substrate 20, and the temperature of the near-infrared reflective laminated glass 40 increases, and heat is reradiated from the near-infrared laminated glass 40 to the transmission side, and the heat shielding effect of the near-infrared reflective substrate 20 is lowered.

It is optional to use the interlayer films 23, 24 by forming different kinds of interlayer films into a multilayer as well as using them in single layers.

Furthermore, in case that the plate glass 21 is used on the incidence side of the sunshine or the like, heat insulation is improved by containing fine particles that absorb various infrared rays in the interlayer film 24 to the extent of not disturbing the visible light transmittance. Therefore, it is preferable. As the infrared-absorbing fine particles, there are, for example, metal fine particles such as Ag, Al and Ti, fine particles of metal nitrides and metal oxides, and conductive transparent oxide fine particles such as ITO, ATO, AZO, GZO, and IZO. Selecting at least one from these and containing it in the interlayer film 24 can improve heat insulation performance. In particular, transparent conducting oxide fine particles, such as ITO, ATO, AZO, GZO and IZO, are desirable.

As the plate glass 22, similar to the incidence side glass 21, it is simple to use a soda-lime glass, prepared by float process, that is superior in flatness and is less in distortion of the transmission image, and is obtained with low cost.

The use of an infrared absorbing glass as the plate glass 22 improves heat insulation performance. Therefore, it is preferable. As the infrared-absorbing glass, it is possible to use a glass that absorbs near-infrared rays by fusing metal ions such as Fe in the glass. It is also possible to use an infrared-absorbing plate glass defined in JIS R3208-1998.

It is preferable that the thickness of the plate glass 21 and the plate glass 22 used for the near-infrared reflective laminated glass of the present invention is in a range of 1-6mm in view of intensity and transmission of near-infrared light of the visible light region, but it does not limit the thickness of the glass used in the present invention. Furthermore, the thickness of the plate glass 21 and the thickness of the plate glass 22 may be the same or different.

The thickness of the interlayer films 23, 24 is preferably about 0.3-2mm, but it is not particularly limited to this thickness.

It is not preferable to use conductive glass and interlayer, since they damage radio transmission of the near-infrared reflective laminated glass of the present invention. It is, however, possible to preferably use a composite film, such as the above-mentioned one in which fine particles of conductive metal and conductive oxide are dispersed in an interlayer, as long as it does not have a conductivity to reflect radio waves.

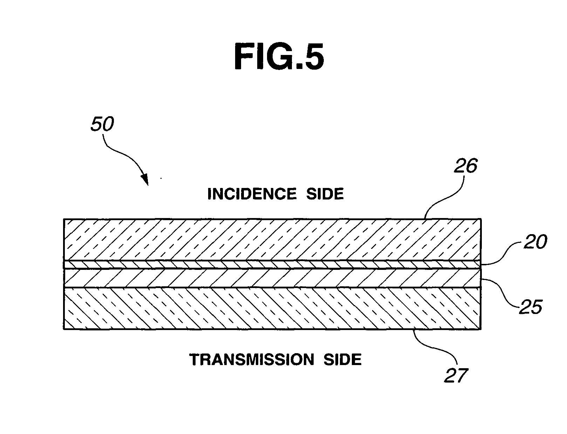

It is optional that an adhesive layer (not shown in the drawings) that is good for glass is formed on a surface of the polymer resin sheet, on which the near-infrared reflective film is not formed, or on the near-infrared reflective film, and, as shown in Fig. 5, the incidence-side plate glass 26 and the near-infrared reflective substrate 20 are laminated together through the adhesive layer, and then it is subjected to a lamination with the transmission-side plate glass 27 through the interlayer film 25 to produce a near-infrared reflective laminated glass 50.

It is desirable that the visible light transmittance of the near-infrared reflective laminated glass of the present invention is 70% or greater as a transmittance capable of sufficiently securing visibility. In the case of using it as an automotive front windshield, it is important that the visible light ray transmittance defined in JIS R3211 is 70% or greater.

It is important that the reflectance of a wavelength region of 900nm to 1400nm has a maximum value exceeding 50% to achieve an effective heat insulation to heat radiation of sunshine while maintaining transmittance of visible light region. In connection with this, it is effective that a light of a wavelength region of 900nm to 1400nm, which is relatively large in multiple value coefficient for calculating solar radiation transmittance shown in JIS R3106-1998, is reflected, for making absorption and reflection of the visible light region, which bring about the reduction of the visible light transmittance, smaller as much as possible and for effectively reducing solar radiation transmittance shown in JIS R3106-1998 in view of the energy distribution of wavelengths of sunshine and wavelengths that become heat by absorption. Therefore, it is effective that the reflection is at the maximum in a wavelength region of 900nm to 1400nm. Furthermore, it is important that the maximum value of the reflection is 50% or greater for achieving an effective heat insulation performance.

Since the near-infrared reflective laminated glass of the present invention has a high visible light transmittance and radio transmission, it can preferably be used for windows of vehicles such as automobiles and trains and architectural windows.

### [Examples and Comparative Examples]

In the following, embodiments of the present invention are specifically explained by examples, but the present invention is not limited to these examples. The following Examples 1-6 relate to the first substrate using a plate glass as the transparent substrate. Comparative Examples 1-5 contrast with Examples 1-6. Examples 7-12 relate to the second substrate using a polymer resin sheet as the transparent substrate. Comparative Examples 6-9 contrast with Examples 7-12.

### EXAMPLE 1

There was produced a near-infrared reflective substrate 20 shown in Fig. 1. As the transparent substrate 1, there was used a plate glass 3 (see Fig. 2) of a transparent soda-lime glass produced by float process, having a size of 1000mm×1000mm and a thickness of 2mm.

This plate glass was washed and dried and set in a sputtering film forming apparatus. Five layers of dielectric films were deposited on the surface to form a near-infrared reflective film 2.

The dielectric films constituting the near-infrared reflective film 2 were formed by film formations of TiO₂ film (thickness: 105nm), SiO₂ film (thickness: 175nm), TiO₂ film (thickness: 105nm), SiO₂ film (thickness: 175nm) and TiO₂ film (thickness: 105nm) in this order from the glass surface. Electric resistance of the dielectric film stacks was measured, and it was almost infinite.

The visible light transmittance defined by JIS R3106-1998 of this near-infrared reflective substrate was 83%. As the reflection characteristics of the plate glass surface were examined, it had the maximum value of reflection at a wavelength of 1000nm, and its maximum value was 82%. Thus, it had near-infrared reflection characteristics sufficient for achieving an effective heat insulation performance.

### EXAMPLE 2

Using the near-infrared reflective substrate 20 produced in Example 1, there was produced a near-infrared reflective laminated glass shown in Fig. 2.

A near-infrared reflective film 4 was positioned on the side of an interlayer film 5. A PVB film having a thickness of 0.76mm was used as the interlayer film 5.

As a plate glass 6, there was used the same plate glass as the plate glass 3 used in Example 1.

The near-infrared reflective substrate 20 (i.e., a laminate of the plate glass 3 and the near-infrared reflective film 4 in Fig. 2) produced in Example 1, the interlayer film 5 and the plate glass 6 were laminated together, followed by a pressurization/heating treatment, thereby producing a near-infrared reflective laminated glass 30 in which the near-infrared reflective substrate 20 produced in Example 1 and the plate glass 6 are bonded together by the interlayer film 5.

The visible light transmittance defined by JIS R3106-1998 of the near-infrared reflective laminated glass produced in the present example was 84%. As the reflection characteristics of the plate glass surface were examined, it had the maximum value of reflection at a wavelength of 1000nm, and its maximum value was 63%. Thus, it had near-infrared reflection characteristics sufficient for achieving an effective heat insulation performance.

It was found by examination of transmission of various radio waves to show sufficient transmission characteristics and to have no practical problem.

### EXAMPLE 3

A near-infrared reflective substrate 20 shown in Fig. 1 was produced in the same manner as that of Example 1, except in that the near-infrared reflective film 2 was formed by dielectric films of seven layers.

The near-infrared reflective film 2 was constituted by dielectric films of seven layers by sequential deposition of Nb₂O₅ film (thickness: 115nm), SiO₂ film (thickness: 175nm), Nb₂O₅ film (thickness: 115nm), SiO₂ film (thickness: 175nm), Nb₂O₅ film (thickness: 115nm), SiO₂ film (thickness: 175nm), and Nb₂O₅ film (thickness: 115nm) on the glass surface of the plate glass 1.

By the measurement of electric resistance of these dielectric films of seven layers, it was confirmed to be almost infinite and to have no problem in transmission of electromagnetic waves, similar to Example 1.

The visible light transmittance defined by JIS R3106-1998 of this near-infrared reflective substrate was 81%. As the reflection characteristics of the plate glass surface were examined, it had the maximum value of reflection at a wavelength of 1000nm, and its maximum value was 90%. Thus, it had near-infrared reflection characteristics sufficient for achieving an effective heat insulation performance.

### EXAMPLE 4

Using the near-infrared reflective substrate 20 produced in Example 3, there was produced a near-infrared reflective laminated glass 30 shown in Fig. 2.

As the plate glass 6, there was used a green-color, infrared-absorbing glass of a thickness of 2mm having the same size as that of the near-infrared reflective substrate produced in Example 3.

A near-infrared reflective film 4 was positioned on the side of an interlayer film 5. A PVB film having a thickness of 0.76mm was used as the interlayer film 5.

The visible light transmittance defined by JIS R3211-1998 of the near-infrared reflective laminated glass produced was 79%, and it was one sufficiently usable as a vehicular front windshield.

As the reflection characteristics of the incidence side surface were examined, it had the maximum value of reflection at a wavelength of 1000nm, and its maximum value was 76%. Thus, it had remarkable near-infrared reflection characteristics.

### EXAMPLE 5

A near-infrared reflective substrate 20 was produced in the same manner as that of Example 1, except in that the near-infrared reflective film 2 was formed by sequential deposition of seven layers of Nb₂O₅ film (thickness: 115nm), SiO₂ film (thickness: 175nm), TiO₂ film (thickness: 110nm), SiO₂ film (thickness: 175nm), TiO₂ film (thickness: 110nm), SiO₂ film (thickness: 175nm), and Nb₂O₅ film (thickness: 115nm).

By the measurement of electric resistance of these dielectric films of seven layers, it was almost infinite, similar to Example 1.

The visible light transmittance defined by JIS R3106-1998 of this near-infrared reflective substrate was 81%. As the reflection characteristics of the plate glass surface were examined, it had the maximum value of reflection at a wavelength of 1000nm, and its maximum value was 92%. Thus, it had near-infrared reflection characteristics sufficient for achieving an effective heat insulation performance.

### EXAMPLE 6

A near-infrared reflective laminated glass 30 was prepared in the same manner as that of Example 2, except in that a near-infrared reflective substrate prepared by Example 5 was used.

The visible light transmittance of this near-infrared reflective laminated glass was 75%. As the reflection characteristics of the incidence side surface were examined, it had the reflection maximum value of 75% at a wavelength of 1000nm. Thus, it had sufficient near-infrared reflection functions.

It was found by examination of transmission of various radio waves to show sufficient transmission characteristics and to have no practical problem.

### EXAMPLE 7

A near-infrared reflective substrate 20 shown in Fig. 1 was produced by using a polymer resin sheet as the transparent substrate 1.
As the polymer resin sheet, there was used a polyethylene terephthalate film having a size of 1000nmx1000nm and a thickness of 100µm.

This film was washed and dried and set in a sputtering film forming apparatus. Five layers of dielectric films were deposited on the surface to form a near-infrared reflective film 2. As the dielectric films constituting the near-infrared reflective film 2, there were sequentially formed from the polymer resin sheet TiO₂ film (thickness: 105nm), SiO₂ film (thickness: 175nm), and TiO₂ film (thickness: 105nm), SiO₂ film (thickness: 175nm) and TiO₂ film (thickness: 105nm).

The visible light transmittance defined by JIS R3106-1998 of this near-infrared reflective substrate 20 was 82%. As the reflection characteristics of the plate glass surface were examined, it had the maximum value of reflection at a wavelength of 1000nm, and its maximum value was 82%. Thus, it had near-infrared reflection characteristics sufficient for achieving an effective heat insulation performance. Electric resistance of the near-infrared reflective film 1 was measured, and it was almost infinite.

### EXAMPLE 8

A near-infrared reflective laminated glass 40 shown in Fig. 4 was produced by using a near-infrared reflective substrate 20 of Example 7.

For the incidence side plate glass 21 and the transmission side plate glass 22, there was used a transparent soda-lime glass produced by float process, having a size of 1000mm×1000mm and a thickness of 2mm.

There were prepared interlayer films 23, 24 formed of PVB films having a thickness of 0.38mm. There were sequentially laminated the incidence side plate glass 21, the interlayer film 23, the near-infrared reflective substrate 20, the interlayer film 24, and the transmission side plate glass 22, followed by conducting a lamination treatment by conducting an autoclave treatment. Herein, the near-infrared reflective film (not shown in the drawings) of the near-infrared reflective substrate 20 was positioned on the side of the interlayer film 23.

The visible light transmittance of the near-infrared reflective laminated glass produced by the present example was 82%. As the reflection characteristics of the incidence side surface were examined, it had the maximum value of reflection at a wavelength of 1000nm, and its maximum value was 61%. Thus, it had near-infrared reflection characteristics sufficient for achieving an effective heat insulation performance.

It was found by examination of transmission of various radio waves to show sufficient transmission characteristics and to have no practical problem.

### EXAMPLE 9

A near-infrared reflective substrate 20 shown in Fig. 1 was produced in the same manner as that of Example 7, except in that the near-infrared reflective film 2 was formed by dielectric films of seven layers and that a polyethylene terephthalate film having a thickness of 100µm was used as the transparent substrate 1.

As the near-infrared reflective film 2, dielectric films of seven layers were constituted by sequential deposition of Nb₂O₅ film (thickness: 115nm), SiO₂ film (thickness: 175nm), Nb₂O₅ film (thickness: 115nm), SiO₂ film (thickness: 175nm), Nb₂O₅ film (thickness: 115nm), SiO₂ film (thickness: 175nm), and Nb₂O₅ film (thickness: 115nm) on the surface of the transparent substrate 1.

The visible light transmittance defined by JIS R3106-1998 of this near-infrared reflective substrate 20 was 79%. As the reflection characteristics of the plate glass surface were examined, it had the maximum value of reflection at a wavelength of 1050nm, and its maximum value was 89%. Thus, it had near-infrared reflection characteristics sufficient for achieving an effective heat insulation performance.

### EXAMPLE 10

A near-infrared reflective laminated glass 40 shown in Fig. 4 was produced by using a near-infrared reflective substrate 20 of Example 9.

For the incidence side plate glass 21 and the transmission side plate glass 22, there was used a transparent soda-lime glass produced by float process, having a size of 1000mmx1000mm and a thickness of 2mm.

There were prepared interlayer films 23, 24 formed of PVB films having a thickness of 0.38mm. There were sequentially laminated the incidence side plate glass 21, the interlayer film 23, the near-infrared reflective substrate 20, the interlayer film 24, and the transmission side plate glass 22, followed by conducting a lamination treatment by conducting an autoclave treatment. Herein, the near-infrared reflective film (not shown in the drawings) of the near-infrared reflective substrate 20 was positioned on the side of the interlayer film 23. As the transmission side plate glass 22, a green-color, heat-ray absorbing glass having a thickness of 2mm was used.

The visible light transmittance of the near-infrared reflective laminated glass produced by the present example was 77%. As the reflection characteristics of the incidence side surface were examined, it had the maximum value of reflection at a wavelength of 1050nm, and its maximum value was 74%. Thus, it had near-infrared reflection characteristics sufficient for achieving an effective heat insulation performance.

It was found by examination of transmission of various radio waves to show sufficient transmission characteristics and to have no practical problem.

### EXAMPLE 11

As the near-infrared reflective film 2, seven layers of Nb₂O₅ film (thickness: 115nm), SiO₂ film (thickness: 175nm), TiO₂ film (thickness: 110nm), SiO₂ film (thickness: 175nm), TiO₂ film (thickness: 110nm), SiO₂ film (thickness: 175nm), and Nb₂O₅ film (thickness: 115nm) were deposited by sputtering method on the surface of a polyethylene terephthalate similar to that of Example 7, thereby producing a near-infrared reflective substrate 20 shown in Fig. 1.

As the electrical resistance of this near-infrared reflective film 2 was examined, it was almost infinite.

The visible light transmittance defined by JIS R3106-1998 of this near-infrared reflective substrate was 80%. As the reflection characteristics of the plate glass surface were examined, it had the maximum value of reflection at a wavelength of 1050nm, and its maximum value was 91%. Thus, it had near-infrared reflection characteristics sufficient for achieving an effective heat insulation performance.

### EXAMPLE 12

A near-infrared reflective laminated glass 40 shown in Fig. 4 was produced by using a near-infrared reflective substrate 20 of Example 11.

The same glasses as those of Example 8 were prepared as the transmission-side plate glass 22 and the incidence-side plate glass 21. A surface of the polymer resin sheet that is a polyethylene terephthalate film, on which the near-infrared reflective film had been formed, was positioned on the incidence side, and a lamination treatment was conducted by two PVB films having a thickness of 0.38mm in a manner similar to Example 8, thereby producing a near-infrared reflective laminated glass.

The visible light transmittance of this near-infrared reflective laminated glass was 81%. As the reflection characteristics of the incidence side surface were examined, it had a maximum value of reflection of 67% at a wavelength of 1050nm. Thus, it had near-infrared reflection characteristics sufficient for achieving sufficient near-infrared reflection functions..

It was found by examination of transmission of various radio waves to show sufficient transmission characteristics and to have no practical problem.

### COMPARATIVE EXAMPLE 1

Similar to Example 1, dielectric films of TiO₂ film (thickness: 105nm), SiO₂ film (thickness: 175nm) and TiO₂ film (thickness: 105nm) were sequentially formed by sputtering method using a transparent soda-lime glass produced by float process having a size of 1000mm×1000mm and a thickness of 2mm, thereby forming a three-layer, dielectric multilayer film.

Furthermore, similar to Example 2, a lamination treatment was conducted by using this produced glass with the dielectric multilayer film, in a manner to dispose a surface of this glass, on which the dielectric multilayer film had been formed, on the lamination surface side, through a glass not formed with a film and a PVB film having a thickness of 0.76mm.

The visible light transmittance of this laminated glass was 84%.
As reflection characteristics of the incidence side surface were examined, it had the maximum value of the reflection at a wavelength of 1000nm. Its maximum value was, however, 48%, which was less than 50%. Thus, it did not have sufficient near-infrared reflection functions.

### COMPARATIVE EXAMPLE 2

Similar to Example 1, two pieces of a transparent soda-lime glass were prepared. On one glass of these, TiO₂ film (thickness: 70nm), SiO₂ film (thickness: 120nm), TiO₂ film (thickness: 70nm), SiO₂ film (thickness: 120nm) and TiO₂ film (thickness: 70nm) were sequentially formed by sputtering method, thereby forming a five-layer, dielectric multilayer film. Each of these dielectric films was nᵢ·dᵢ = 175nm, which is less than 225nm.

A lamination treatment was conducted in a manner to dispose a surface of this glass, on which the dielectric multilayer film had been formed, on the lamination surface side, through a glass not formed with a film and a PVB film having a thickness of 0.76mm.

The visible light transmittance of this laminated glass was as low as 55%. The reflectance at a wavelength of 1000nm was about 10%, showing a considerably low near-infrared reflectance.

### COMPARATIVE EXAMPLE 3

Similar to Example 1, two pieces of a transparent soda-lime glass were prepared. On one glass, TiO₂ film (thickness: 160nm), SiO₂ film (thickness: 260nm), TiO₂ film (thickness: 160nm), SiO₂ film (thickness: 260nm) and TiO₂ film (thickness: 160nm) were sequentially formed by sputtering method, thereby forming a five-layer, dielectric multilayer film.

Each of the five-layer dielectric films was nᵢ·dᵢ = 375nm, which is greater than 350nm.

A lamination treatment was conducted in a manner to dispose a surface of this glass, on which the dielectric multilayer film had been formed, on the lamination surface side, through a glass not formed with a film and a PVB film having a thickness of 0.76mm. The visible light transmittance of this laminated glass was as considerably low as 45%. The reflectance at a wavelength of 1000nm was about 10%, showing a considerably low near-infrared reflectance.

### COMPARATIVE EXAMPLE 4

Similar to Example 1, two pieces of a transparent soda-lime glass were prepared. On one glass, TiO₂ film (thickness: 110nm), SiO₂ film (thickness: 175nm), Nb₂O₅ film (thickness: 115nm), TiO₂ film (thickness: 110nm) and TiO₂ film (thickness: 110nm) were sequentially formed by sputtering method, thereby forming a five-layer, dielectric multilayer film.

This five-layer dielectric film is a multilayer film not satisfying a condition of nₑₘₐₓ<nₒₘᵢₙ or nₒₘₐₓ<nₑₘᵢₙ.

A lamination treatment was conducted in a manner to dispose a surface of this glass, on which the dielectric multilayer film had been formed, on the lamination surface side, through a glass not formed with a film and a PVB film having a thickness of 0.76mm. Although the visible light transmittance of this laminated glass was 82%, the reflectance at a wavelength of 1000nm was about 40%, showing a low near-infrared reflectance.

### COMPARATIVE EXAMPLE 5

Similar to Example 1, two pieces of a transparent soda-lime glass were prepared. On one glass of these, the same five-layer dielectric multilayer film as that of Example 1 was formed by sputtering method. A lamination treatment was conducted in a manner to dispose a surface of this glass, on which the dielectric multilayer film had been formed, on the lamination surface side, through a glass not formed with a film and a PVB film having a thickness of 0.76mm. The visible light transmittance of this laminated glass was 81%. As the reflection characteristics of the transmission side surface were examined, it had a maximum value of reflection at a wavelength of 1000nm. Its maximum value was 85%, showing sufficient near-infrared reflection functions. As water was attached to the film surface, the reflection color tone of the attached portion has changed considerably. Thus, it was difficult to refer the same as maintaining a good visibility.

### COMPARATIVE EXAMPLE 6

Similar to Example 7, there were prepared two pieces of a transparent soda-lime glass and a polyethylene terephthalate film having a thickness of 100µm. On this polyethylene terephthalate film, dielectric films of TiO₂ film (thickness: 105nm), SiO₂ film (thickness: 175nm) and TiO₂ film (thickness: 105nm) were sequentially formed by sputtering method, thereby forming a three-layer, dielectric multilayer film. Similar to Example 8, this was subjected to a lamination treatment through two PVB films having a thickness of 0.38mm. The visible light transmittance of this laminated glass was 81%. As the reflection characteristics of the incidence side surface were examined, it had a maximum value of reflection at a wavelength of 1000nm. Its maximum value was, however, 45%, which is less than 50%. Thus, it was difficult to refer the same as having sufficient near-infrared reflective functions.

### COMPARATIVE EXAMPLE 7

Similar to Example 7, there were prepared two pieces of a transparent soda-lime glass and a polyethylene terephthalate film. On the polyethylene terephthalate film, TiO₂ film (thickness: 70nm), SiO₂ film (thickness: 120nm), TiO₂ film (thickness: 70nm), SiO₂ film (thickness: 120nm), and TiO₂ film (thickness: 70nm) were sequentially formed by sputtering method, thereby forming a five-layer, dielectric multilayer film. Each of these dielectric films was nᵢ·dᵢ = 175nm, which is less than 225nm.

Similar to Example 8, a lamination treatment was conducted in a manner to dispose the surface, on which this dielectric multilayer film had been formed, on the incidence side, through two PVB films having a thickness of 0.38mm.

The visible light transmittance of this laminated glass was as low as 54%. The reflectance at a wavelength of 1000nm was about 10%, showing a considerably low near-infrared reflectance.

### COMPARATIVE EXAMPLE 8

Similar to Example 7, there were prepared two pieces of a transparent soda-lime glass and a polyethylene terephthalate film. On the polyethylene terephthalate film, TiO₂ film (thickness: 160nm), SiO₂ film (thickness: 260nm), TiO₂ film (thickness: 160nm), SiO₂ film (thickness: 260nm), and TiO₂ film (thickness: 160nm) were sequentially formed by sputtering method, thereby forming a five-layer, dielectric multilayer film.

Each of the five-layer dielectric films was nᵢ·dᵢ = 375nm, which is greater than 350nm.

Similar to Example 8, a lamination treatment was conducted in a manner to dispose the surface, on which this dielectric multilayer film had been formed, on the incidence side, through two PVB films having a thickness of 0.38mm. The visible light transmittance of this laminated glass was as considerably low as 44%. The reflectance at a wavelength of 1000nm was about 10%, showing a considerably low near-infrared reflectance.

### COMPARATIVE EXAMPLE 9

Similar to Example 7, there were prepared two pieces of a transparent soda-lime glass and a polyethylene terephthalate film. On the polyethylene terephthalate film, TiO₂ film (thickness: 110nm), SiO₂ film (thickness: 175nm), Nb₂O₅ film (thickness: 115nm), TiO₂ film (thickness: 110nm) and TiO₂ film (thickness: 110nm) were sequentially formed by sputtering method, thereby forming a five-layer, dielectric multilayer film.

This five-layer dielectric film is a multilayer film not satisfying a condition of nₑₘₐₓ<nₒₘᵢₙ or nₒₘₐₓ<nₑₘᵢₙ.

Similar to Example 8, a lamination treatment was conducted in a manner to dispose the surface, on which the dielectric multilayer film had been formed, on the incidence side, through two PVB films having a thickness of 0.38mm. Although the visible light transmittance of this laminated glass was 80%, the reflectance at a wavelength of 1000nm was about 40%, showing a low near-infrared reflectance.

## Claims

1. In a near-infrared reflective substrate prepared by forming on a transparent substrate a near-infrared reflective film prepared by alternate deposition of low-refractive-index dielectric films and high-refractive-index dielectric films, the near-infrared reflective substrate being **characterized in that** the near-infrared reflective film is prepared by laminating on at least one surface of the transparent substrate the dielectric films that are 4 layers or greater and 11 layers or less to satisfy conditions of the following (1) and (2), is 70% or greater in visible light transmittance defined in JIS R3106-1998 of the substrate on which the near-infrared reflective film has been formed, and has a maximum value of reflection that exceeds 50% in a wavelength region of 900nm to 1400nm,
(1) when the dielectric films are numbered in order from a side of the transparent substrate, when maximum and minimum values of refractive index of an even-numbered layer are respectively referred to as nₑₘₐₓ and nₑₘᵢₙ, and when maximum and minimum values of refractive index of an odd-numbered layer are respectively referred to as nₒₘₐₓ and nₒₘᵢₙ, nₑₘₐₓ<nₒₘᵢₙ or nₒₘₐₓ<nₑₘᵢₙ,
(2) when the layer numbered "i" has a refractive index of nᵢ and a thickness of dᵢ, 225nm≤ nᵢ · dᵢ ≤350nm relative to an infrared rays having a
wavelength λ in a range of 900 to 1,400nm.

2. A near-infrared reflective substrate according to claim 1, which is **characterized in that** the near-infrared reflective film is formed by using TiO₂ or Nb₂O₅ or Ta₂O₅ for the high-refractive-index dielectric film and by using SiO₂ for the low-refractive-index dielectric film.

3. A near-infrared reflective substrate according to claim 1 or 2, which is **characterized in that** the transparent substrate is a glass plate.

4. A near-infrared reflective substrate according to claim 3, which is
**characterized in that** the glass plate is an infrared-absorbing glass.

5. A near-infrared reflective laminated glass, which is **characterized in that** a near-infrared reflective substrate according to claim 3 or 4 is laminated on a glass plate or plate-like resin by using an interlayer film.

6. A near-infrared reflective laminated glass according to claim 5, which is **characterized in that** the plate glass that is laminated on the near-infrared reflective substrate by using the interlayer film is an infrared absorbing glass.

7. A near-infrared reflective laminated glass according to claim 5 or 6, which is **characterized in that** the interlayer film contains an infrared absorbing member.

8. A near-infrared reflective laminated glass according to claim 7, which is **characterized in that** the infrared absorbing member is conductive oxide particles.

9. A near-infrared reflective double glazing, **characterized in that** the near-infrared reflective substrate according to claim 3 or 4 is used for at least one plate glass of the double glazing in which two plate glasses are opposingly disposed and in which there is formed an air layer sealed between the two plate glasses using a sealing member at a periphery of the two plate glasses, and **characterized in that** the near-infrared reflective film is positioned on a side of the air layer.

10. In a near-infrared reflective substrate prepared by forming on a transparent substrate a near-infrared reflective film prepared by alternate deposition of low-refractive-index dielectric films and high-refractive-index dielectric films, the near-infrared reflective substrate being **characterized in that** the transparent substrate is a polymer resin sheet and that the near-infrared reflective film is prepared by deposition of the dielectric films that are 4 layers or greater and 11 layers or less to satisfy conditions of the following (1) and (2), is 70% or greater in visible light transmittance defined in JIS R3106-1998, and has a maximum value of reflection that exceeds 50% in a wavelength region of 900nm to 1400nm,
(1) when the dielectric films are numbered in order from a side of the transparent substrate, when maximum and minimum values of refractive index of an even-numbered layer are respectively referred to as nₑₘₐₓ and nₑₘᵢₙ, and when maximum and minimum values of refractive index of an odd-numbered layer are respectively referred to as nₒₘₐₓ and nₒₘᵢₙ, nₑₘₐₓ<nₒₘᵢₙ or nₒₘₐₓ<nₑₘᵢₙ,
(2) when the layer numbered "i" has a refractive index of nᵢ and a thickness of dᵢ, 225nm≤ nᵢ · dᵢ ≤350nm relative to an infrared ray having a wavelength λ in a range of 900 to 1,400nm.

11. A near-infrared reflective substrate according to claim 10, which is **characterized in that** the near-infrared reflective film is formed by using TiO₂ or Nb₂O₅ or Ta₂O₅ for the high-refractive-index dielectric film and by using SiO₂ for the low-refractive-index dielectric film.

12. A near-infrared reflective substrate according to claim 10 or 11, which is **characterized in that** the polymer resin sheet is an infrared-absorbing film.

13. A near-infrared reflective laminated glass, which is **characterized in that** the near-infrared reflective substrate according to any of claims 10 to 12 is laminated between two plate glasses by using an interlayer film.

14. A near-infrared reflective laminated glass according to claim 13, which is **characterized in that** the polymer resin sheet has a thickness in a range of 10-200µm and that curved-shape plate glasses are used.

15. A near-infrared reflective laminated glass according to claim 13 or 14, which is **characterized in that** the interlayer film contains an infrared-absorbing member.

16. A near-infrared reflective laminated glass according to claim 15, which is **characterized in that** the infrared-absorbing member is conductive oxide particles.

17. A near-infrared reflective laminated glass according to any of claims 13 to 16, which is **characterized in that** the plate glass is an infrared-absorbing glass.
